# EUROPEAN PATENT APPLICATION

(11) **EP 1 347 327 A1**
(43) Date of publication of application: **24.09.2003**
(21) Application number: 02024678.1
(22) Date of filing: 05.11.2002
(51) Int. Cl.: G02C 1/04

(54) **Spectacle frame**

(30) Priority: 20.03.2002 JP 2002001502 U
(71) Applicant: Volks Company, Limited, Sabae-shi, Fukui 916-0013 (JP)
(72) Inventor: Okude, Yasuo, Sabae-shi, Fukui 916-0013 (JP); Noguchi, Shinichi, Fukui-shi, Fukui 918-8016 (JP)
(74) Representative: Kehl, Günther, Dipl.-Phys.

(57) **Abstract**

A spectacle frame being capable of replacing the front portion (1) as desired and being lightweight in comparison with the clip-on type and the flip-up type is provided. The spectacle frame includes the frame portion (2) attached with temples (13, 13) at both ends of the upper frame so as to be foldable and a front portion (1) having both lenses (4, 4). A bridge (9) provided at the center of the upper frame (8) of the frame portion (2) is formed with a fitting groove (10) opened upward, and a bridge (3) of the front portion (1) is formed so as to be fittable into the fitting groove (10). Provision of magnets on the bridge portion (3) and/or the fitting groove (10) further enhances connection between the front portion (1) and the frame portion (2).

## Description

### BACKGROUND OF THE INVENTION

### 1. Field of the Invention

The present invention relates to a spectacle frame in which the front portion including lenses is replaceable.

### 2. Description of the Related Art

In recent years, various types of spectacle frames are in the market. When classified broadly, there are a full-rim type having two annular rims with lenses fitted therein, and a half-rim type in which upper halves of the lenses are fitted into the rims and the lower halves thereof are held by highly tensed string such as transparent string. There also exists a spectacle frame of two-point type, in which both of the lenses are directly secured to both ends of the bridge with screws and joint parts are secured on the outsides of the lenses.

As a natural part of aging, one needs reading glasses when reading newspapers or magazines. On the other hand, one often wares sunglasses when driving a car. In such cases, one generally attaches a clip-on frame in front of the front portion, which is called clip-on type. Attaching the clip-on frame in front of the front portion doubles the front portion, and thus the weight is increased, which may cause a pain after wearing them for a long time.

In addition, since the front portion is doubled, fashionability of the spectacle frame is impaired. There also exists a flip-up type in addition to the clip-on type, but it has the same disadvantages as the clip-on type. Since the flip-up front portion is constantly attached in front of the front portion, it causes fatigue in comparison with the clip-on type which is attached when needed.

As described thus far, the clip-on type and the flip-up type have the aforementioned disadvantages.

### SUMMARY OF THE INVENTION

Accordingly, it is an object of the present invention to provide a spectacle frame which is light-weight and thus less fatiguing in comparison with the clip-on type or the flip-up type, and is capable of replacing the front portion as needed to prevent fashionability from being impaired.

In order to achieve the object, the invention provides a spectacle frame being capable of replacing a front portion, comprising: a frame portion having temples attached on both ends of an upper frame so as to be foldable; and the front portion connecting both lenses with a bridge; wherein a bridge provided at the center of the frame portion is formed with a fitting groove opening upward, and a bridge of the front portion is formed to be capable of being fitted into the fitting groove.

The invention also provides a spectacle frame being capable of replacing the front portion, comprising: a frame portion having temples attached on both ends of an upper frame so as to be foldable; and the front portion connecting both lenses with a bridge; wherein a bridge provided at the center of the frame portion is formed with a fitting groove opening upward, and a magnet is disposed in the fitting groove and/or on the bridge of the front portion.

The front portion includes lenses directly secured on both sides of the bridge with screws.

### BRIEF DESCRIPTION OF THE DRAWINGS

Fig. 1 is a schematic explanatory drawing showing a spectacle frame of the invention;
Fig. 2 is a schematic explanatory drawing showing the front portion; and
Fig. 3 is a schematic explanatory drawing showing the frame portion.

### DESCRIPTION OF THE PREFERRED EMBODIMENTS

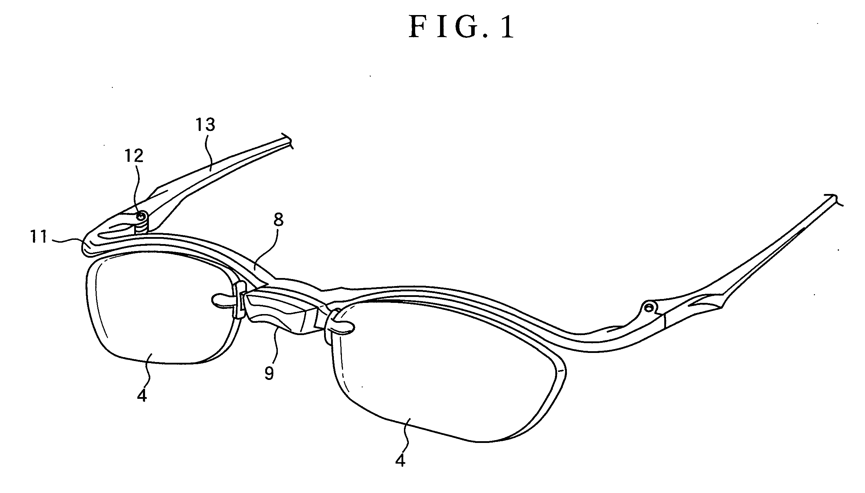

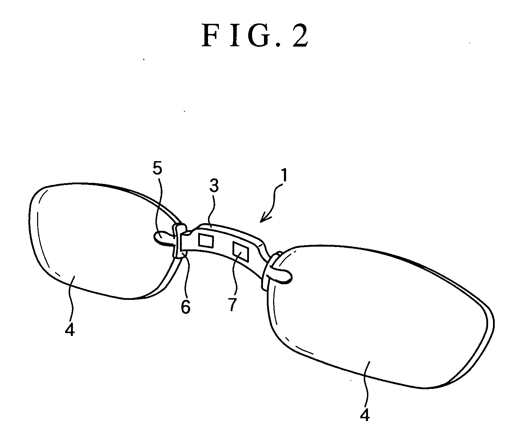

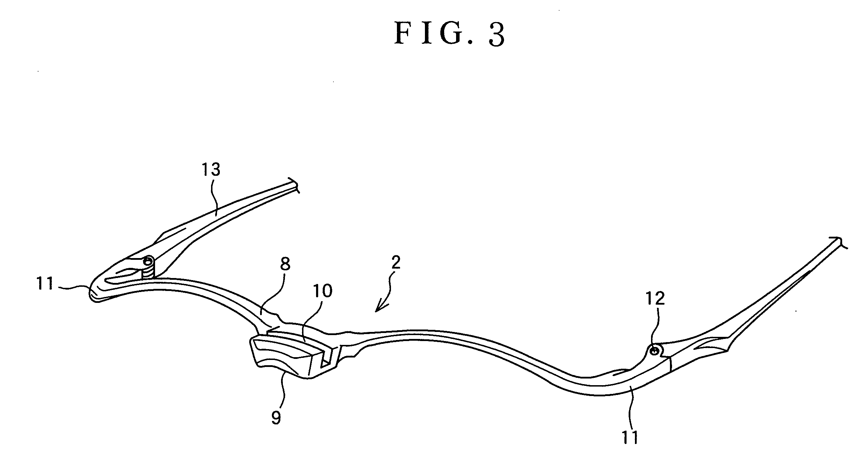

Referring now to the drawings, an embodiment of the present invention will be described. Fig. 1 is a schematic explanatory drawing showing a spectacle frame formed by combining the frame portion and the front portion integrally. Fig. 2 is a schematic explanatory drawing showing the front portion. Fig. 3 is a schematic explanatory drawing showing the frame portion.

Fig. 1 to Fig. 3 show an embodiment of the invention, wherein the reference numeral 1 designates a front portion, the numeral 2 designates a frame portion. Fig. 1 shows a state in which the front portion 1 is attached on the frame portion 2. Fig. 2 shows the front portion 1, and Fig. 3 shows the frame portion 2, independently.

The front portion 1 includes both lenses 4, 4 connected on both sides of the bridge 3, and the inner side portions of the lenses 4, 4 are secured by fastening strips 5, 5 provided on both sides of the bridge 3.

The fastening strip 5 is provided at the base thereof with a contact strip 6 being in contact with the inner peripheral edge of the lens 4, so that the lens is prevented from rotating. The bridge 3 is formed with two holes and two magnets 7, 7 are stored in the holes respectively on the back side thereof so as not to project from the surface of the bridge 3.

An upper frame 8 located at the front of the frame portion 2 is provided with a bridge 9 at the center thereof, and the bridge 9 is formed with a fitting groove 10 opening upward. The both ends of the upper frame 8 are formed with joint parts 11, 11 curving toward the rear, and temples 13, 13 are attached on the joint parts 11, 11 via joints 12, 12 respectively so as to be foldable.

Fig. 1 shows the case in which the front portion 1 is attached on the bridge 9 of the frame portion 2. When assembling, the bridge 3 connecting both of the lenses 4, 4 is fitted into the fitting groove 10 formed on the bridge 9 of the upper frame 8. In a state in which the front portion 1 is mounted, the upper frame 8 of the frame portion 2 is located along the upper edge of the lenses 4, 4, there is no possibility that the field of view is hindered by the upper frame 8. Though the nose pads are not shown in the figure, they are attached on the ends of the pad arms which extend from the bridge 9 of the upper frame 8 in a curved manner.

Fitting the bridge 3 in the fitting groove 10 connects the frame portion 2 and the front portion 1. However, in order to prevent the bridge 3 fitted in the fitting groove 10 from coming off, it is effective to dispose magnet 7 in a hole formed on the bridge 3. It is also possible to dispose a magnet on the inner surface of the fitting groove 10 so that this magnet and the magnet 7 on the bridge 3 are attracted with each other to fix the bridge 3 into the fitting groove 10 by a force of attraction of the magnets.

Though the front portion 1 shown in Fig. 2 is a frameless (rimless) type, it is also possible to construct the front portion as a full-rim type, or as a half-rim type in which the upper half of the lens fits into the rim and the lower half thereof is held by a transparent string. The lenses are not limited to prescription lenses for near sighted eye or old sighted eye, and sunglasses may be used.

The spectacle frame of the invention is constructed in such a manner that the front portion may be attached on the frame portion provided with temples at both ends of the upper frame. Therefore, the bridge of the front portion is detachably attached in the fitting groove formed on the central bridge of the upper frame. The bridge fitted in the fitting groove is suitably positioned and is prevented from coming off by a forces of attraction of the magnets.

The front portion to be mounted on the upper frame of the frame portion is free to dismount, and may be replaced as needed. However, since the front portion is not a dual structure as in the case of the clip-on type in the related art, the spectacle frame of the invention is relatively light and thus the user does not feel fatigue or a pain even after wearing it for a long time. In addition, since the front portion is not a dual structure, fashionability of the glasses is not impaired.

## Claims

1. A spectacle frame being capable of replacing a front portion, comprising:
a frame portion having temples attached on both ends of an upper frame so as to be foldable; and
the front portion connecting both lenses with a bridge;
wherein a bridge provided at the center of the frame portion is formed with a fitting groove opening upward, and a bridge of the front portion is formed to be capable of being fitted into the fitting groove.

2. A spectacle frame being capable of replacing the front portion, comprising:
a frame portion having temples attached on both ends of an upper frame so as to be foldable; and
the front portion connecting both lenses with a bridge;
wherein a bridge provided at the center of the frame portion is formed with a fitting groove opening upward, and a magnet is disposed in the fitting groove and/or on the bridge of the front portion.

3. A spectacle frame according to Claim 1 and Claim 2, wherein the front portion comprises lenses directly secured on both sides of the bridge with screws.
